# EUROPÄISCHE PATENTANMELDUNG

(11) **EP 2 700 751 A2**
(43) Veröffentlichungstag der Anmeldung: **26.02.2014**
(21) Anmeldenummer: 13172595.4
(22) Anmeldetag: 19.06.2013
(51) Int. Cl.: E02D 29/12, F03D 9/00

(54) **Offshore-Energieerzeugungsanlage und Montageverfahren**

(30) Priorität: 10.07.2012 DE 102012013618
(71) Anmelder: Voith Patent GmbH, 89522 Heidenheim (DE)
(72) Erfinder: Maier, Wolfgang, 89564 Nattheim (DE)
(74) Vertreter: Dr. Weitzel & Partner

(57) **Zusammenfassung**

Die Erfindung betrifft eine Offshore-Energieerzeugungsanlage umfassend einen durch eine Fluidbewegung angetriebenen Leistungsaufnehmer; einen elektrischen Generator, der durch den Leistungsaufnehmer wenigstens mittelbar angetrieben wird; ein elektrisches Verbindungskabel zur Leistungsübertragung; und eine Pfahlgründung, umfassend einen Fundamentpfahl, der sich unter dem Meeresgrund erstreckt.

Die Erfindung ist dadurch gekennzeichnet, dass am Fundamentpfahl unterhalb des Meeresgrunds ein Kabeldurchgang angeordnet ist, der sich durch eine Außenwandung des Fundamentpfahls erstreckt und durch den das elektrische Verbindungskabel geführt ist.

## Beschreibung

Die Erfindung betrifft eine Offshore-Energieerzeugungsanlage mit den oberbegrifflichen Merkmalen von Anspruch 1 sowie ein Montageverfahren für den Anschluss eines elektrischen Verbindungskabels zur Leistungsübertragung an eine Offshore-Energieerzeugungsanlage.

Offshore-Energieerzeugungsanlagen, die kinetische Energie einer Fluidbewegung an einem Meeresstandort zur Energiegewinnung nutzen, sind in unterschiedlichen Ausführungen bekannt. Dies können Meeresströmungskraftwerke, insbesondere Gezeitenkraftwerke und Wellenkraftwerke sein, wobei ein sich drehender oder oszillierender Leistungsaufnehmer an einer freistehenden Anlage durch eine Meeresströmung angetrieben wird. Des Weiteren gehören Offshore-Windkraftanlagen zu diesem Anlagentyp. Eine mögliche Bauform gattungsgemäßer Anlagen stellen an einer Maschinengondel gelagerte Horizontalläuferturbinen dar, die wenigstens mittelbar einen elektrischen Generator innerhalb der Gondel antreiben. Typischerweise ist die Maschinengondel auf einen Turm der Anlage aufgesetzt, der auf einem Fundament am Meeresgrund ruht. Vorliegend werden Offshore-Energieerzeugungsanlagen mit einem Fundament in Form einer Pfahlgründung behandelt, die wenigstens einen Fundamentpfahl umfasst, der sich unter den Meeresgrund erstreckt. Für einen hinreichend verfestigten Meeresboden kann ein einzelner Fundamentpfahl (Monopile) verwendet werden. Hierzu wird beispielsweise auf die DE 103 40 088 A1 verwiesen. Alternativ kann eine Pfahlgründung mehrere, in den Meeresboden reichende Fundamentpfähle aufweisen. Ein Beispiel einer solchen Gründungsstruktur in Form eines Tripods wird durch die DE 10 2004 042 066 A1 offenbart.

Die von einer Offshore-Energieerzeugungsanlage erzeugte elektrische Leistung wird mittels eines Seekabels von der Anlage weggeführt. Dabei kann die Kabelführung von der Maschinengondel aus entlang der Außenseite der Stützstruktur erfolgen. Zum Schutz des Kabels werden Röhren oder rinnenförmige Aufnahmesysteme verwendet, die im Bereich des Meeresbodens eine Kabelumlenkung in die Horizontalrichtung sicherstellen. Diese Kabelführungssysteme werden als J-Tubes bezeichnet. Beispielhaft werden DE 10 2008 020 964 A1 und WO 02/066828 A1 genannt. Alternativ kann das elektrische Verbindungskabel zur Leistungsübertragung innerhalb einer geschlossenen Stützstruktur geführt werden. Hierzu wird auf die EP 1 985 845 B1 verwiesen, die eine Seekabeldurchführung am Turm beschreibt, die sich im Bereich von 3,5 - 5 m über dem Meeresboden befindet. Solche Kabeldurchführungen am Turm werden, wie in der GB 2479771 A und WO 2009/000322 A1 beschrieben, meist wasserdicht gekapselt ausgeführt.

Zum Schutz des vom Turm weglaufenden elektrischen Verbindungskabels kann eine Einbettung in den Meeresboden vorgenommen werden. Bekannt ist das Einspülen von Seewasserkabeln mittels eines Hochdruckwasserstrahls. Ferner wird eine Kabelverlegung mittels eines Fräswerkzeugs durch die JP 06141430 A beschrieben. Eine Alternative zum Schutz eines Seewasserkabels zwischen zwei Offshore-Windkraftanlagen eines Parks wird durch die WO 2012/008833 A2 offenbart. Die Kabelführung an den Anlagen selbst erfolgt mittels J-Tubes. Von dort aus verlaufen die elektrischen Verbindungskabel in unmittelbarer Anlagennähe auf dem Meeresgrund bis zu einem Einlass eines Bohrkanals, der mittels eines horizontal gesteuerten Bohrverfahrens geschaffen wird und der von einem Vorfeld einer ersten Anlage bis in die Nähe einer zweiten Anlage reicht. Für die Ausführung der Bohrungen dient eine auf dem Meeresgrund abgesenkte Bohrvorrichtung.

Zum Einführen eines elektrischen Verbindungskabels in eine Zugangsöffnung im Turm einer Offshore-Energieerzeugungsanlage, die unter dem Wasserspiegel und oberhalb des Meeresgrunds liegt, schlägt die WO 2011/141494 A1 den Einsatz eines Tauchroboters (ROV) vor, der zunächst im Bereich der Kabeleintrittsöffnung am Turm eine Einschub- und Sicherungsvorrichtung anbringt, durch die das eigentliche Verbindungskabel in den mit Wasser gefluteten Innenbereich des Turms vorgeschoben wird.

Aus der EP 1145397 B1 ist ferner die Bevorratung eines elektrischen Verbindungskabels für eine Offshore-Windkraftanlage auf einer Kabeltrommel im Turm oder im Fundament bekannt. Um eine elektrische Verbindung zu einer Nachbaranlage eines Parks herzustellen, wird das elektrische Verbindungskabel aus einer über dem Meeresgrund liegenden Öffnung am Turm herausgezogen und mittels einer Schleppleine zur nächsten Anlage gebracht.

Nachteilig an den bisher bekannten Vorrichtungen und Verfahren zur Montage und Führung eines elektrischen Verbindungskabels von einer Offshore-Energieerzeugungsanlage zu einem Einspeise- oder Umspannpunkt oder zu einer Nachbaranlage eines Parks stellt die aufwendige Kabelmontage dar, die den Einsatz von Tauchern oder ROVs notwendig macht. Des Weiteren besteht bei einer starken Gewässerströmung die Gefahr, dass die bekannten externen Strukturen zur Kabelsicherung, wie J-Tubes oder am Turm angebrachte Stopfbuchsen, aufgrund der ständigen durch die variierende Anströmung bedingte Lastwechsel eine begrenzte Lebensdauer aufweisen.

Der Erfindung liegt die Aufgabe zugrunde, eine Offshore-Energieerzeugungsanlage mit einer Pfahlgründung so zu gestalten, dass das elektrische Verbindungskabel zur Leistungsübertragung über die gesamte Kabellänge geschützt ist. Insbesondere sollen keine zyklisch wechselnden Lasten auf das elektrische Verbindungskabel wirken. Des Weiteren ist ein Verfahren zur elektrischen Anbindung einer Offshore-Energieerzeugungsanlage anzugeben, sodass die Verlegung des elektrischen Verbindungskabels vereinfacht und sicher ausgeführt werden kann.

Die voranstehend genannte Aufgabe wird durch die Merkmale der unabhängigen Ansprüche gelöst. Vorteilhafte Ausgestaltungen ergeben sich aus den Unteransprüchen.

Ausgangspunkt der Lösung der voranstehend genannten Aufgabe ist eine Offshore-Energieerzeugungsanlage mit einer Pfahlgründung. Es liegt demnach wenigstens ein Fundamentpfahl vor, der sich in den Meeresboden erstreckt. Für einen Monopile ruht die gesamte Anlage auf einem einzelnen Fundamentpfahl. Denkbar ist jedoch auch die Verwendung mehrerer über dem Meeresgrund miteinander verbundener Fundamentpfähle oder ein kombiniertes Fundament, für das zusätzlich zu dem unter den Meeresgrund reichenden Fundamentpfahl weitere Stützeinrichtungen, etwa Schwerkraftelemente oder Seilabspannungen, vorhanden sind.

Erfindungsgemäß ist das elektrische Verbindungskabel, das die von einem elektrischen Generator der Offshore-Energieerzeugungsanlage erzeugte Leistung überträgt, im Fundamentpfahl bis zu einem Kabeldurchgang geführt, der unterhalb des Meeresgrunds liegt. Demnach erstreckt sich das elektrische Verbindungskabel durch die Außenwandung des Fundamentpfahls in einer vorbestimmten Tiefe im Meeresboden, sodass ein guter Schutz des Kabels gegen Strömungskräfte und weiteren Risiken, wie Ankerschäden, vorliegt. Als Meeresgrund am Fundamentpfahl wird das mittlere Niveau des Meeresbodens, d. h. eine örtlich und zeitlich gemittelte Sedimenthöhe in einem Kreis um die Anlage verstanden, der dem Rotordurchmesser entspricht. Demgemäß stellt das mittlere Niveau des Meeresbodens jene Höhenreferenz dar, die zur Bestimmung der Eindringtiefe des Fundamentpfahls unter den Meeresgrund herangezogen wird.

Der Kabeldurchgang, durch den das elektrische Verbindungskabel am Fundamentpfahl geführt ist, liegt bevorzugt in einer solchen Tiefe unter dem Meeresgrund, dass stabile Bodenverhältnisse vorliegen und damit in einem Bereich, für den keine Sedimentverfrachtungen aufgrund der Umgebungsströmung eintreten. Die gewählte Austrittstiefe des Kabeldurchgangs unter dem Meeresgrund hängt von den herrschenden Strömungs- und Bodenverhältnissen ab. Bevorzugt wird ein Kabeldurchgang so angelegt, dass er mindestens 3 m unter dem Meeresgrund liegt. Dabei kann im Fall eines felsigen Untergrunds die Lage des Kabeldurchgangs im Vergleich zu einem Standort mit einem sandigen oder tonigen Untergrund in einer geringeren Tiefe unter dem Meeresgrund angelegt werden. Bevorzugt wird ferner, den Kabeldurchgang so anzuordnen, dass er unterhalb der Zone hoher Kerbbelastung am Fundamentpfahl liegt. Vorteilhaft ist daher ein Kabeldurchgang, der sich im Bereich der unteren zwei Drittel der Eindringtiefe des Fundamentpfahls in den Meeresboden befindet. Besonders bevorzugt wird das untere Drittel der Eindringtiefe des Fundamentpfahls unter dem Meeresgrund für die Anlage des Kabeldurchgangs verwendet.

Für eine bevorzugte Weitergestaltung wird das elektrische Verbindungskabel innerhalb des Fundamentpfahls bis in einen trockenen Innenbereich der Anlage geführt, in dem ein Anschlusselement für das elektrische Verbindungskabel angeordnet ist. Besonders bevorzugt ist der trockene Innenbereich als ein wasserdicht verschließbares Kompartiment im Bereich des Fundamentpfahls ausgelegt, das den Zutritt von Servicetechnikern ermöglicht. Innerhalb des Kompartiments kann zusätzlich zum Anschlusselement, an dem das elektrische Verbindungskabel durch einfaches Klemmen kontaktiert werden kann, die Leistungselektronik der Anlage untergebracht werden. Dabei kann es sich um Stromrichter sowie einen Trafo handeln. Ferner wird bevorzugt, weitere Aggregate der Anlage, insbesondere hydrostatische, sensorische und die zur Steuerung herangezogenen Komponenten, innerhalb des trockenen Innenbereichs anzuordnen.

Für eine bevorzugte Ausgestaltung mündet der Kabeldurchgang außerhalb des Fundamentpfahls in einem Kabeltunnel, der ebenfalls unterhalb des Meeresgrunds verläuft. Dabei wird der Kabeltunnel als Teil der Offshore-Energieerzeugungsanlage angesehen. Besonders bevorzugt wird der Kabeltunnel druckfest, flüssigkeitsdicht und trockenfallend ausgebildet. Für eine weitere vorteilhafte Ausgestaltung ist der Innendurchmesser des Kabeltunnels so gewählt, dass er größer als der Außendurchmesser des darin verlegten elektrischen Verbindungskabels ist. Daher kann das trocken verlegte elektrische Verbindungskabel mit einer verringerten Kabelkapazität geführt werden.

Für eine bevorzugte Ausführungsform ist vorgesehen, den Kabeltunnel begehbar zu gestalten und/oder in diesem eine Transportvorrichtung, beispielsweise ein Schlittensystem für den Material- und/oder Personentransport, vorzusehen. Wird der Kabeltunnel bis zu einem zentralen Einstiegspunkt eines Parks oder mit einem an Land führenden Erschließungstunnel verbunden, besteht eine Zugangsmöglichkeit zur Anlage. Wird ein solcher Kabeltunnel mit einer Anlagenvariante kombiniert, für die im Innern des Fundamentpfahls ein trockener Innenbereich vorliegt, besteht eine Zutrittsmöglichkeit über einen für diesen Fall entsprechend groß ausgebildeten Kabeldurchgang, sodass Montage- und Servicemaßnahmen durch menschliches Bedienungspersonal ausgeführt werden können.

Für den Fall eines begehbaren oder für den Personentransport ausgestatteten Kabeltunnels muss dieser aus Sicherheitsgründen eine wasserdichte Tunnelauskleidung, beispielsweise durch Stahlrohrsegmente, aufweisen. Des Weiteren werden Schotts zur sicheren Abtrennung einzelner Kabeltunnelabschnitte sowie eine Lüftungsanlage vorgesehen.

Für eine vereinfachte Ausgestaltungsvariante ist der an den Kabeldurchgang unter dem Meeresgrund anschließende Innenbereich des Fundamentpfahls geflutet. Für diese Ausführung liegt bevorzugt eine im Innern des Fundamentpfahls angeordnete Kabelführungsvorrichtung vor, die ein durch den Kabeldurchgang von außen in die Anlage eingeschobenes elektrisches Verbindungskabel zu einer Steckvorrichtung lenkt. Dabei wird eine Ausgestaltung bevorzugt, für die der Steckvorgang durch eine automatisierte oder ferngesteuerte Aktorik ausgeführt wird, sodass für die Montage keine Taucher eingesetzt werden müssen.

Für das erfindungsgemäße Verfahren zur Erstellung des elektrischen Anschlusses einer Offshore-Energieerzeugungsanlage wird ein elektrisches Verbindungskabel zur Leistungsübertragung durch einen Kabeldurchgang in der Außenwandung des Fundamentpfahls gezogen, der unter dem Meeresgrund angeordnet ist. Besonders bevorzugt wird zunächst der Fundamentpfahl errichtet und in Abhängigkeit der Bodenverhältnisse einzementiert. Erst in einem nachfolgenden Verfahrensschritt wird der Kabeldurchgang unter dem Meeresgrund geöffnet.

Besonders bevorzugt wird der Kabeldurchgang mittels einer Durchbohrung der Außenwandung des Fundamentteils angelegt. Dabei kann am Fundamentpfahl eine Durchbohrungsstelle vorliegen, die beispielsweise als Betonwand ohne Stahlarmierung angelegt ist, welche für einen Standardbohrkopf einer Horizontalbohrmaschine bohrbar ist. Ferner ist es denkbar, den Fundamentpfahl als Stahlrohr anzulegen und für die Durchbohrungsstelle eine Durchbrechung der stählernen Außenhülle vorzusehen und mittels einer mit einem Steinbohrer bohrbaren flüssigkeitsdichten Abdeckung zu versehen, wobei diesen Zweck eine Betoninnenverkleidung erfüllen kann.

Wird zum Öffnen des Kabeldurchgangs nach dem Errichten des Fundamentpfahls ein Bohrverfahren verwendet, kann dies aus dem Bohrpfahl heraus erfolgen. Hierzu wird eine Bohrvorrichtung in das Innere des Fundamentpfahls versenkt oder vor der Errichtung des Fundamentpfahls in diesem vorinstalliert. Alternativ besteht die Möglichkeit, die Bohrvorrichtung an den Fundamentpfahl anzudocken, wobei es für diese Ausführung vorteilhaft ist, eine Zentriervorrichtung innerhalb des Fundamentpfahls zu verwenden, um die Bohrkrone zu der unterhalb des Niveaus des Meeresbodens gelegenen Durchbohrungsstelle zu führen.

Für eine besonders bevorzugte Ausgestaltung wird nach der Errichtung des Fundamentpfahls von außen eine horizontal gesteuerte Bohrung ausgeführt und die Außenwandung des Fundamentpfahls an einer dafür vorgesehenen Durchbohrungsstelle zur Anlage des Kabeldurchgangs durchbrochen. Die horizontal gesteuerte Bohrung kann durch eine Bohrvorrichtung vorgenommen werden, die im Umgebungsbereich der Offshore-Energieerzeugungsanlage auf dem Meeresgrund abgesetzt wird.

Besonders bevorzugt wird eine Ausgestaltung mit einer im Trockenen ausgeführten horizontal gesteuerten Bohrung. Zu diesem Zweck kann ein bis an Land reichender Tunnel zur Parkerschließung angelegt werden, dessen Querschnitt so hinreichend groß gewählt ist, dass darin eine Horizontalbohrmaschine aufgebaut werden kann. Denkbar ist, an den Betriebsbereichen der Bohrvorrichtung erweiterte Kavernen im Tunnel anzulegen, die die Handhabung des Bohrgestänges ermöglichen. Von diesen Arbeitspunkten aus erfolgt die Anlage horizontal gesteuerter Bohrungen im Trockenen, um Kabelkanäle bis zu den Durchbohrungsstellen an einen Fundamentpfahl einer Offshore-Energieerzeugungsanlage sowie den daran anschließenden Kabeldurchgang an der Außenwandung des Fundamentpfahls vorzutreiben. Bevorzugt wird bei Anlage des Kabeltunnels eine für die vorliegenden Druckbedingungen flüssigkeitsdichte Tunnellauskleidung angebracht. Diese kann segmentweise angebracht werden. Entsprechend wird die Verbindung zwischen dem Kabeltunnel und dem Kabeldurchgang am Fundamentpfahl abgedichtet.

Für ein vereinfachtes Verfahren zur Schaffung eines erfindungsgemäßen elektrischen Anschlusses einer Offshore-Energieerzeugungsanlage wird am

Fundamentpfahl vor dem Einsetzen in den Meeresboden ein Kabeldurchgang angelegt. Das Einsetzen des Fundamentpfahls erfolgt mit einer solchen Eindringtiefe in den Meeresboden sowie einer derart gewählten Orientierung, dass der am Fundamentpfahl bereits vorgefertigte Kabeldurchgang in der Endmontagestellung mit einem unter dem Meeresgrund angelegten Kabeltunnel fluchtet. Der Innenbereich des Fundamentpfahls im Bereich des Kabeldurchgangs und der von der Anlage weglaufende Kabeltunnel können wasserführend ausgebildet werden. Das Verlegen des elektrischen Verbindungskabels wird dann durch Tauchroboter ausgeführt.

Nachfolgend wird die Erfindung anhand bevorzugter Ausführungsbeispiele in Verbindung mit Figurendarstellungen genauer erläutert. In diesen ist im Einzelnen Folgendes dargestellt:
- Figur 1: zeigt eine erfindungsgemäße Offshore-Energieerzeugungsanlage in teilangeschnittener Seitenansicht.
- Figur 2: zeigt einen vergrößerten Ausschnitt aus Figur 1 mit einem unter dem Meeresgrund am Fundamentpfahl anschließenden Kabeltunnel.
- Figur 3: zeigt ein Herstellungsverfahren für einen erfindungsgemäßen Kabeldurchgang am Fundamentpfahl unter dem Meeresgrund mittels eines horizontal gerichteten Bohrverfahrens, das von einem Erschließungstunnel unter dem Meeresgrund aus erfolgt.
- Figur 4: zeigt ein vom Meeresgrund ausgehendes horizontal gerichtetes Bohrverfahren zum Öffnen eines unter dem Meeresboden liegenden, erfindungsgemäßen Kanaldurchgangs am Fundamentpfahl.
- Figur 5: zeigt eine Ausführungsalternative, für die der erfindungsgemäße Kabeldurchgang am Fundamentpfahl im Bereich des Fundamentsockels durch eine innerhalb der Offshore-Energieerzeugungsanlage positionierte Bohrvorrichtung ausgeführt wird.
- Figur 6: zeigt eine Ausgestaltungsvariante mit einem vorgefertigten Kabeldurchgang am Fundamentpfahl, der vor dem Einsetzen des Fundamentpfahls in den Meeresboden angelegt ist.

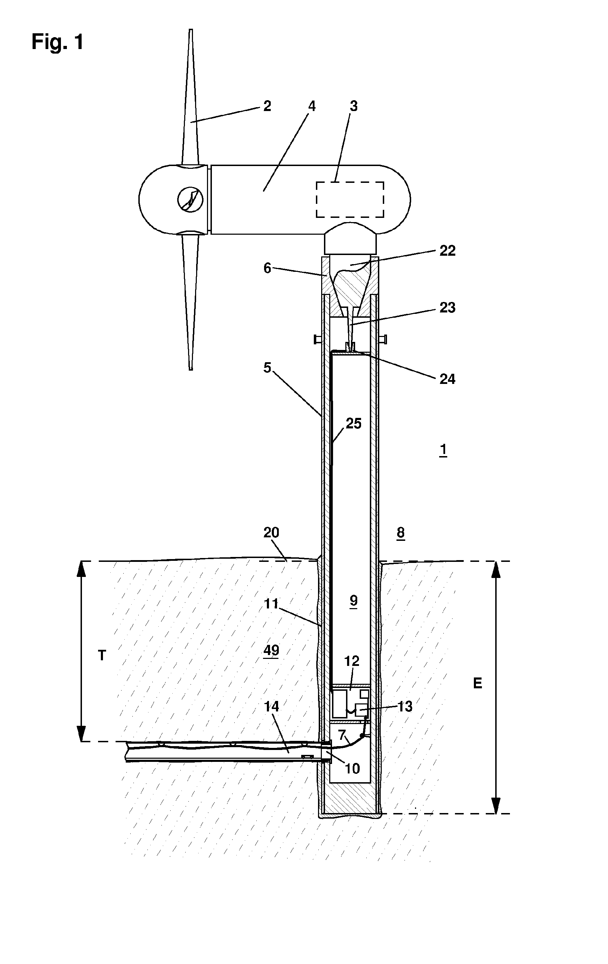

Figur 1 zeigt schematisch vereinfacht eine Offshore-Energieerzeugungsanlage 1, die für das vorliegende Ausführungsbeispiel als vollständig tauchendes, freistehendes Gezeitenkraftwerk ausgebildet ist. Als Leistungsaufnehmer 2 dient ein propellerförmiger Rotor. Dieser kann ein bidirektional anströmbares Profil aufweisen, sodass ein Betrieb unter zyklisch wechselnden Anströmungsrichtungen für Ebbe und Flut ohne eine Bewegung der Anlage möglich ist. Alternativ können die Rotorblätter mit einem Pitch-Verstellmechanismus ausgestattet sein oder es liegt eine Drehvorrichtung zur Nachführung der Anlage um die Hochachse vor.

Für die in Figur 1 gezeigte Ausgestaltung ist der rotorförmige Leistungsaufnehmer 2 als Horizontalläufer ausgelegt und an einer Maschinengondel 4 gelagert. Innerhalb der Maschinengondel 4 ist ein in Figur 1 gestrichelt skizzierter elektrischer Generator 3 untergebracht. Dieser wird wenigstens mittelbar vom Leistungsaufnehmer 2 angetrieben, wobei Details des Antriebsstrangs zwischen dem Leistungsaufnehmer 2 und dem elektrischen Generator 3 in Figur 1 nicht dargestellt sind. Bevorzugt wird insbesondere ein Direktantrieb mit einer drehstarren Kopplung zwischen dem Läufer des elektrischen Generators 3 und dem Leistungsaufnehmer 2. Alternativ können mechanische, elektrostatische oder hydrodynamische Getriebe zur mittelbaren Leistungsübertragung im Antriebsstrang zwischengeschaltet sein.

Für das vorliegende Ausführungsbeispiel ist die Offshore-Energieerzeugungsanlage 1 modular aufgebaut. Dabei wird die Maschinengondel 4 auf einen Turm 5 der Anlage aufgesetzt, der als Stützstruktur dient. Für diesen Zweck schließt sich an die Maschinengondel 4 ein Turmadapter 22 an. Dieser weist eine komplementäre Form zu einer Kopplungsvorrichtung 6 am Turm auf, sodass die Maschinengondel 4 bei der Anlagenerstellung auf den Turm 5 abgesetzt werden kann und bei Betrieb durch ihre Eigenschwere gesichert, formschlüssig aufgenommen in der Kopplungsvorrichtung 6 ruht. Ein erneutes Bergen der Maschinengondel 5 mit dem Leistungsaufnehmer 2 zu Servicezwecken ist durch ein Abheben vom Turm 5 möglich.

Die in Figur 1 dargestellte Offshore-Energieerzeugungsanlage weist eine Pfahlgründung 8 mit einem einzelnen Fundamentpfahl 9 auf, der sich mit einer Eindringtiefe E vom Meeresgrund 20 in den Meeresboden 49 erstreckt. Für die dargestellte Ausgestaltung ist die Pfahlgründung 8 als Monopile ausgebildet, wobei der Fundamentpfahl 9 und der Turm 5 einstückig angelegt sind. Alternativ besteht die Möglichkeit, dass der Turm 5 ein separates Bauteil darstellt, das auf der Pfahlgründung 8 befestigt ist. Eine solche Ausgestaltung wird dann gewählt, wenn der Leistungsaufnehmer 2 einen größeren Abstand zum Meeresgrund 20 aufweist. Dies ist insbesondere für Offshore-Windkraftanlagen der Fall.

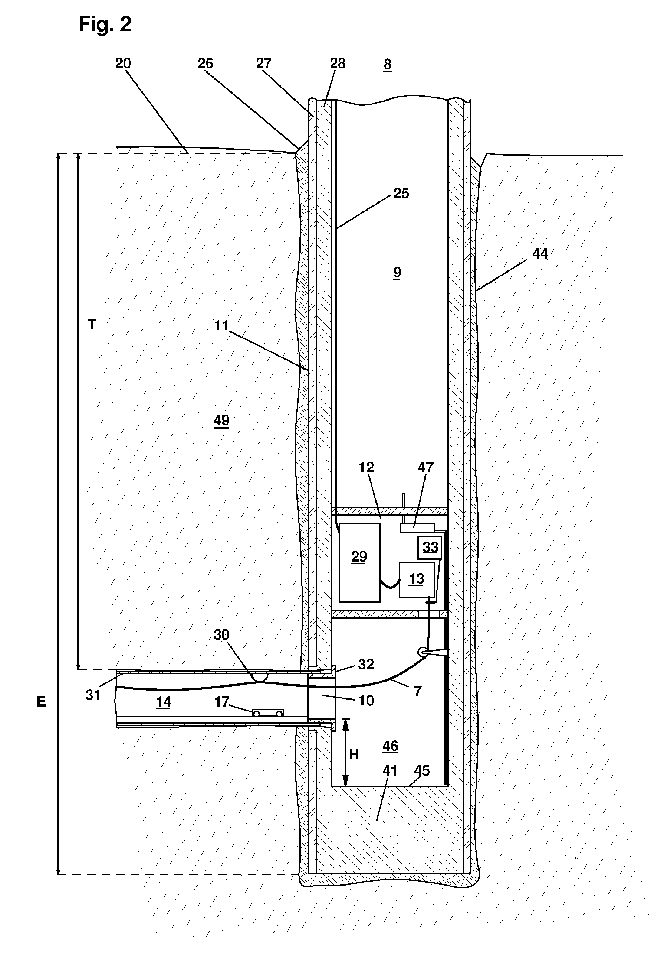

Erfindungsgemäß weist die in Figur 1 skizzierte Offshore-Energieerzeugungsanlage 1 einen unter dem Meeresgrund 20 am Fundamentpfahl 9 angeordneten Kabeldurchgang 10 auf, durch den ein elektrisches Verbindungskabel 7 zur Leistungsübertragung geführt ist. Für die gezeigte, bevorzugte Ausgestaltung umfasst die Offshore-Energieerzeugungsanlage 1 einen Kabeltunnel 14 unter dem Meeresgrund 20, der an den Kabeldurchgang 10 anschließt und der trockenfallend ausgelegt ist, sodass das elektrische Verbindungskabel 7 an Luft zu einem Anschlusselement 13 in einem Kompartiment innerhalb des Fundamentpfahls 9 geführt werden kann, das als trockener Innenbereich 12 angelegt ist. Von dort verläuft ein Betriebskabel 25 zu einem Leistungs- und Versorgungsstecker 24 im Bereich der Kopplungsvorrichtung 6, in den ein Kopplungselement 23 des Turmadapters 22 eingreift. Hierdurch wird ein Anschluss zwischen der Maschinengondel 4 und den im trockenen Innenbereich 12 befindlichen Anlagenkomponenten bewirkt. Dies wird nachfolgend genauer anhand der vergrößerten Darstellung von Figur 2 beschrieben.

Figur 2 zeigt das entlang der Innenwandung des Fundamentpfahls 9 geführte Betriebskabel 25, wobei dieser Teil des Fundamentpfahls 9 geflutet ausgeführt werden kann. Das Betriebskabel 25 tritt in einer im Einzelnen nicht dargestellten, druckdichten Durchführung in den trockenen Innenbereich 12 am Fundamentpfahl 9 ein, der sich über dem Kabeldurchgang 10 befindet. Innerhalb des trockenen Innenbereichs 12 ist ein Leistungs- und Betriebsmodul 29 angeordnet, zu dem das Betriebskabel 25 geführt ist.

Im Leistungs- und Betriebsmodul 29 sind die elektrischen Komponenten sowie bevorzugt weitere Versorgungseinrichtungen der Offshore-Energieerzeugungsanlage 1 zusammengefasst. Typischerweise handelt es sich um Stromrichter und einen elektrischen Transformator. Des Weiteren werden bevorzugt hydrostatische oder pneumatische Aggregate der Offshore-Energieerzeugungsanlagen in diesem im Trockenen befindlichen Leistungs- und Betriebsmodul 29 zusammengefasst. Diese können beispielsweise für den Betrieb einer Bremsvorrichtung des Leistungsaufnehmers 2 oder für eine hydrostatische Anfahrhilfe für dessen Lagerung an der Maschinengondel 4 dienen. Entsprechend dient das Betriebskabel 25 nicht nur zur Übertragung der vom elektrischen Generator 3 erzeugten Leistung, sondern auch zur Führung von Betriebsmedien wie Hydrauliköl, Druckluft oder Schmier- oder Spülmedien. Des Weiteren werden bevorzugt die zur Verarbeitung sensorischer Daten und für die Betriebsführung verwendeten Steuerungskomponenten innerhalb des Leistungs- und Betriebsmoduls 29 im trockenen Innenbereich 12 untergebracht. Demgemäß umfasst das Betriebskabel 25 bevorzugt zusätzlich Signal- und Steuerungsleitungen.

Innerhalb des trockenen Innenbereichs 12 ist ein Anschlusselement 13 für das elektrische Verbindungskabel 7 angeordnet. Am einfachsten liegen am Anschlusselement 13 Anschlussklemmen für das elektrische Verbindungskabel 7 vor. Des Weiteren besteht eine elektrische Verbindung zwischen dem Anschlusselement 13 und dem Leistungs- und Betriebsmodul 29 zur Leistungsübertragung. Bevorzugt umfasst die Verbindung zusätzlich Signal- und Steuerungsleitungen, die, aufgenommen in das elektrische Verbindungskabel 7, von der Offshore-Energieerzeugungsanlage 1 weglaufen.

Des Weiteren zeigt Figur 2 eine Ausgestaltung des Fundamentpfahls 9 mit einem äußeren Stahlrohr 27 an der Außenwandung 11, das im Bereich des Kabeldurchgangs 10 eine Durchbrechung aufweist. Im Inneren erstreckt sich ein zunächst geschlossener Betoninnenmantel 28. Dieser umfasst einen Fundamentsockel 41, der das äußere Stahlrohr 27 des Fundamentpfahls 9 nach unten hin wasserdicht abschließt. Dabei übernimmt der Fundamentsockel 41 die Funktion eines zusätzlichen Ballasts, um beim Einsetzen des Fundamentpfahls 9 in eine am Meeresboden angelegte Bohrung 44 wie ein Kiel zu wirken, der die Auftriebswirkung des trockenen Innenbereichs 12 ausbalanciert und die vertikale Einführbarkeit des Fundamentpfahls 9 in die Bohrung 44 sicherstellt.

Für die in Figur 2 gezeigte Ausgestaltung liegt der Kabeldurchgang 10 und der daran anschließende Kabeltunnel 14 auf einer Austrittstiefe T im Bereich des unteren Drittels der Eindringtiefe E des Fundamentpfahls 9. Des Weiteren ist der Kabeldurchgang 10 mit einer Stufenhöhe H über dem Bodenbereich 45 angeordnet, sodass im unteren Teil des Fundamentpfahls ein Sammelbecken 46 entsteht, dem eine Lenzeinrichtung zugeordnet ist, um die Anlage gegen eindringendes Wasser abzusichern. Hierzu wird bevorzugt im trockenen Innenbereich 12 eine Lenzpumpe 47 angeordnet, die Wasser aus dem Sammelbecken 46 in den wasserführenden Teil des Fundamentpfahls 9 beziehungsweise zum Außenbereich der Offshore-Energieerzeugungsanlage 1 abpumpen kann.

Im Bereich des Kabeldurchgangs 10 ist ein Tunnelanschluss 32 zur druckfesten Abdichtung des Übergangs zum Kabeltunnel 14 angelegt. Des Weiteren weist der Kabeltunnel 14 eine für den vorliegenden Wasserdruck flüssigkeitsdichte Tunnellauskleidung 31 auf. Diese kann in Form dichtend verbundener Stahlsegmente, beispielsweise in Form von 120° Teilbögen, angelegt sein. Als alternative Tunnellauskleidung 31 kann eine seewasserfeste, faserarmierte Betoninnenwandung verwendet werden, die mittels eines Spritzbetonverfahrens hergestellt wird.

Für die in Figur 2 gezeigte, bevorzugte Ausgestaltung ist im Kabeltunnel 14 eine schienenbasierte Transportvorrichtung 17 angelegt, die für den Material- und/oder Personentransport ausgelegt ist. Des Weiteren umfasst der Kabeltunnel 14 für eine bevorzugte begehbare Ausgestaltung im Einzelnen nicht dargestellte Sicherungs- und Schottsysteme sowie Lüftungsanlagen.

Nach der Erstellung des Kabeltunnels 14 und des Kabeldurchgangs 10 und der dafür notwendigen Sicherungs- und Abdichtungsmaßnahme kann die Montage des elektrischen Verbindungskabels 7 erfolgen. Für eine bevorzugte Ausgestaltung wird an einem Kabeleinzugssystem 33, das im Bereich des Anschlusselements 13 im trockenen Innenbereich 12 angeordnet ist, eine Zugleine nach außen durch den Kabeltunnel 14 bis zum Standort der Kabeltrommel an Land oder einer Offshore-Kaverne ausgegeben. Danach kann das elektrische Verbindungskabel 7 mittels der Rückzugsbewegung des Zugseils durch den Kabeltunnel 14 bis zum Anschlusselement 13 eingezogen werden. Bevorzugt wird das elektrische Verbindungskabel 7 innerhalb des Kabeltunnels 14 an Kabelhalterungen 30 mit Abstand zur Innenwandung der Tunnellauskleidung 31 gehaltert.

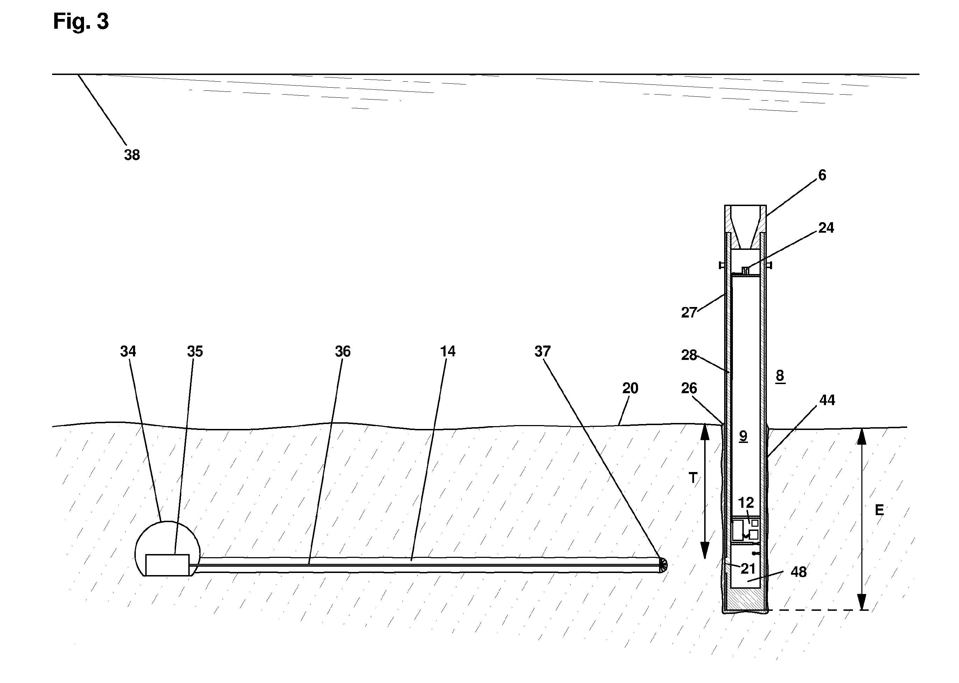

Figur 3 zeigt einen Abschnitt einer bevorzugte Ausgestaltung des erfindungsgemäßen Montageverfahrens zum Anschluss eines elektrischen Verbindungskabels 7 über einen Kabeltunnel 14 und einen Kabeldurchgang 10 mit einer Austrittstiefe T unter dem Meeresgrund 20. In einem ersten, für Figur 3 bereits als ausgeführt dargestellten Verfahrensschritt, wird der Fundamentpfahl 9 mit einer Eindringtiefe E unter dem Meeresgrund 20 in eine Bohrung 44 eingesetzt und durch eine Zementierung 26 gesichert. In einem weiteren Verfahrensschritt wird aus einem trockenfallenden Erschließungstunnel 34 heraus mittels einer Horizontalbohrmaschine 35 eine horizontal gerichtete Bohrung ausgeführt. Schematisch vereinfacht ist ein Bohrgestänge 36 mit einem Bohrkopf 37 skizziert, wobei der Nachschub einzelner Bohrgestängesegmente aus einer im Einzelnen nicht dargestellten Kaverne im Bereich der Horizontalbohrmaschine 35 erfolgen kann.

Die horizontal gerichtete Bohrung wird bis zu einer Durchbohrungsstelle 21 am Fundamentpfahl 9 geführt, die aus einem durchbohrbaren Material besteht. Bevorzugt liegt im Bereich der Durchbohrungsstelle 21 eine Öffnung des äußeren Stahlrohrs 27 des Fundamentpfahls 9 vor. Des Weiteren ist die Armierung des Betoninnenmantels 28 in diesem Bereich so angelegt, dass der Bohrkopf 37 die Durchbohrungsstelle 21 zur Schaffung eines Kabeldurchgangs 10 öffnen kann. Nachfolgend werden die voranstehend beschriebenen Sicherungs- und Dichtungsmaßnahmen im Bereich des Kabeltunnels 14 und des Kabeldurchgangs 10 ausgeführt und der unterhalb des trockenen Innenbereichs 12 gelegene Einlassraum 48 trockengelegt. Sodann besteht eine Zugangsmöglichkeit zum trockenen Innenbereich 12.

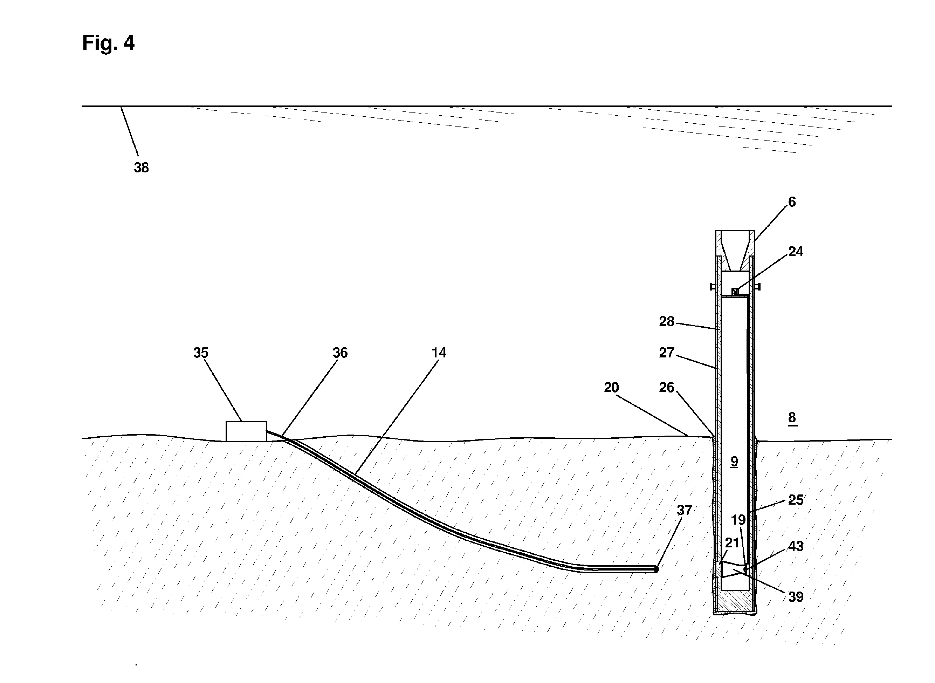

Figur 4 skizziert eine alternative Ausgestaltung zur Schaffung des Kabeldurchgangs 10 unter den Meeresgrund 20 am Fundamentpfahl 9. Für dieses Ausführungsbeispiel wird eine Horizontalbohrmaschine 35 auf dem Meeresgrund 20 verwendet, die einen zunächst absteigenden, für die vorliegende Ausgestaltung wasserführenden Kabeltunnel 14 anlegt. Dabei zeigt Figur 4 den Bohrkopf 37 vor der Durchbohrungsstelle 21 am Fundamentpfahl 9. Diese ist wiederum bohrbar angelegt, sodass im weiteren Verfahrensverlauf, der in Figur 4 nicht dargestellt ist, der Bohrkopf einen Kabeldurchgang 10 am Fundamentpfahl 9 schafft. Rückwärtig zur Durchbohrungsstelle 21 ist eine Bohrkopfführung 39 angebracht, die den Bohrkopf zentriert und im Verlauf des weiteren Vorschubs des Bohrgestänges 36 zu einer Kabelanschlussvorrichtung 43 führt. Diese umfasst bevorzugt eine im Einzelnen nicht dargestellte Kopplungsvorrichtung zur Verbindung des Bohrkopfs 37 mit einem innerhalb der Kabelanschlussvorrichtung 43 aufgewickelten Zugseil, das bei der Rückzugsbewegung des Bohrkopfs 37 in den Kabeltunnel 14 eingezogen wird. An das so im Kabeltunnel 14 verlegte Zugseil kann ein elektrisches Verbindungskabel 7 angekoppelt werden, das mittels einer automatisierten Einholvorrichtung für das Zugseil, die Teil der Kabelanschlussvorrichtung 43 ist, in den Kabeltunnel 14 eingezogen werden kann.

Des Weiteren umfasst die Kabelanschlussvorrichtung 43 bevorzugt eine automatische Steckvorrichtung 19, um einen seewasserdichten Stecker am elektrischen Verbindungskabel 7 und ein komplementäres Anschlussstück am Betriebskabel 25 im Bereich der Kabelanschlussvorrichtung 43 zusammenzuführen. Auf diese Weise kann unter Wasser eine Verbindung vom Leistungs- und Versorgungsstecker 24 im Bereich der Kopplungsvorrichtung 6, über das Betriebskabel 25 und den seewasserfesten Stecker im Bereich der Kabelanschlussvorrichtung 43 zum elektrischen Verbindungskabel 7 im Kabeltunnel 14 geschaffen werden. Vom Bohrauslass am Standort der Horizontalbohrmaschine 35 am Meeresgrund 20 aus kann das elektrische Verbindungskabel 7 durch bekannte Maßnahmen, etwa mittels eines Wasserpflugs, in den Meeresboden eingetieft werden.

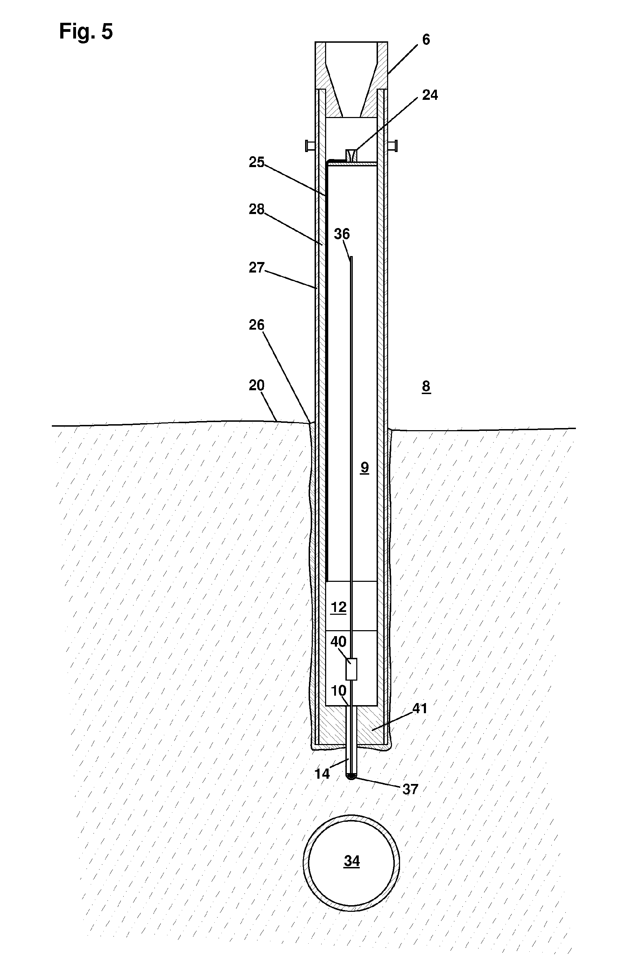

Figur 5 zeigt eine weitere Ausgestaltungsalternative, für die der Kabeldurchgang 10 am Fundamentpfahl 9 mittels einer aus dem Inneren des Fundamentpfahls heraus arbeitenden Bohrvorrichtung 40 geschaffen wird. Dargestellt ist eine Ausführungsform, für die der Bohrkopf 37 einen ausbetonierten Fundamentsockel 41 am Bodenbereich des Fundamentpfahls 9 durchsticht. Bevorzugt wird die Bohrung zu einem unterhalb der Offshore-Energieerzeugungsanlage entlang führenden, trockenfallenden Erschließungstunnel 34 geführt. Entsprechend muss die Bohrvorrichtung 40 samt des Bohrgestänges 36 in einem trockenen Kompartiment des Fundamentpfahls 9 angeordnet sein.

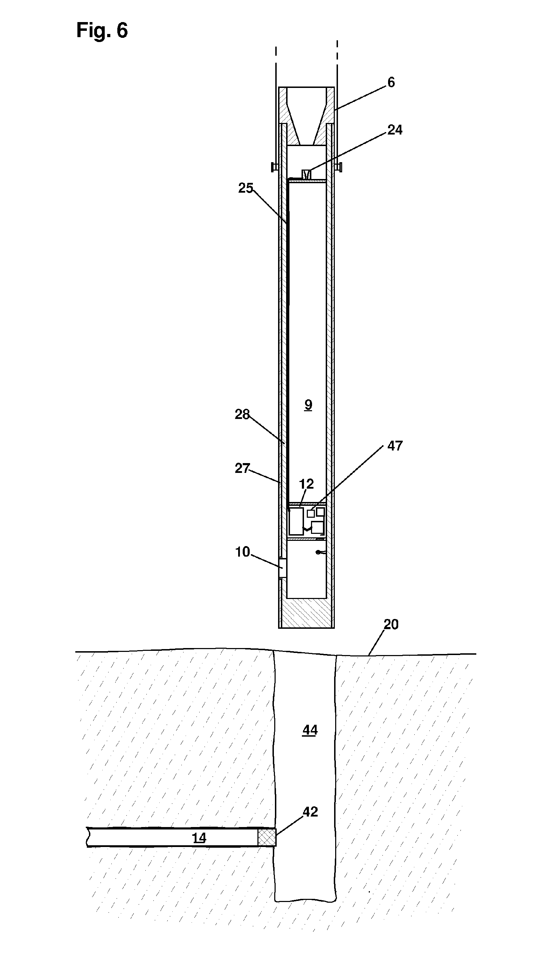

Figur 6 zeigt eine weitere Ausgestaltung der Erfindung, wobei der Kabeldurchgang 10 bereits vor dem Einführen in die Bohrung 44 im Meeresboden vorliegt. Demnach muss der Fundamentpfahl 9 für diese Ausgestaltungsvariante mit einer vorgegebenen Orientierung und einer vorbestimmten Einbautiefe unter dem Meeresgrund 20 installiert werden, sodass der Kabeldurchgang 10 mit dem Kabeltunnel 14 unter dem Meeresgrund 20 fluchtet. Dabei wird der Kabeltunnel 14 zunächst mittels einer Dichtvorrichtung 42 geschützt. Nach dem Einzementieren des Fundamentpfahls 9 in der Bohrung 44 kann ein Freipumpen des Einstiegsbereichs im Fundamentpfahl 9 unterhalb des trockenen Innenbereichs 12 durch eine Lenzpumpe 47 erfolgen.

Für eine vereinfachte, im Einzelnen nicht dargestellte Ausgestaltung ist der Kabeltunnel 14 sowie der gesamte Innenbereich des Fundamentpfahls 9 geflutet, wobei die Verlegung des elektrischen Verbindungskabels mittels eines Robotersystems erfolgt. Für diese vereinfachte Ausführung dient die zunächst im Kabeltunnel 14 angebrachte Dichtvorrichtung 42 lediglich als Schutz des Kabeldurchgangs und des Kabeltunnels bei der Einzementierung des Fundamentpfahls 9. Alternativ kann eine derartige Schutzvorrichtung anstatt am Ausgang des Kabeltunnels 14 am Kabeldurchgang 10 des Fundamentpfahls 9 angelegt sein.

Weitere Ausgestaltungen der Erfindung ergeben sich im Rahmen der nachfolgenden Schutzansprüche.

### Bezugszeichenliste

- 1: Offshore-Energieerzeugungsanlage
- 2: Leistungsaufnehmer
- 3: elektrischer Generator
- 4: Maschinengondel
- 5: Turm
- 6: Kopplungsvorrichtung
- 7: elektrisches Verbindungskanal
- 8: Pfahlgründung
- 9: Fundamentpfahl
- 10: Kabeldurchgang
- 11: Außenwandung
- 12: trockener Innenbereich
- 13: Anschlusselement
- 14: Kabeltunnel
- 17: Transportvorrichtung
- 18: Kabelführungsvorrichtung
- 19: Steckvorrichtung
- 20: Meeresgrund
- 21: Durchbohrungsstelle
- 22: Turmadapter
- 23: Kopplungselement
- 24: Leistungs- und Versorgungsstecker
- 25: Betriebskabel
- 26: Zementierung
- 27: Stahlrohr
- 28: Betoninnenmantel
- 29: Leistungs- und Betriebsmodul
- 30: Kabelhalterung
- 31: Tunnellauskleidung
- 32: Tunnelanschluss
- 33: Kabeleinzugssystem
- 34: Erschließungstunnel
- 35: Horizontalbohrmaschine
- 36: Bohrgestänge
- 37: Bohrkopf
- 38: Wasseroberfläche
- 39: Bohrkopfführung
- 40: Bohrvorrichtung
- 41: Fundamentsockel
- 42: Dichtvorrichtung
- 43: Kabelanschlussvorrichtung
- 44: Bohrung
- 45: Bodenbereich
- 46: Sammelbecken
- 47: Lenzpumpe
- 48: Einlassraum
- 49: Meeresboden
- 50: Stahlhülse
- E: Eindringtiefe
- H: Stufenhöhe
- T: Austrittstiefe

## Patentansprüche

1. Offshore-Energieerzeugungsanlage umfassend
einen durch eine Fluidbewegung angetriebenen Leistungsaufnehmer (2); einen elektrischen Generator (3), der durch den Leistungsaufnehmer (2) wenigstens mittelbar angetrieben wird;
ein elektrisches Verbindungskabel (7) zur Leistungsübertragung; und
eine Pfahlgründung (8), umfassend einen Fundamentpfahl (9), der sich unter dem Meeresgrund (20) erstreckt;
**dadurch gekennzeichnet, dass**
am Fundamentpfahl (9) unterhalb des Meeresgrunds (20) ein Kabeldurchgang (10) angeordnet ist, der sich durch eine Außenwandung (11) des Fundamentpfahls (9) erstreckt und durch den das elektrische Verbindungskabel (7) geführt ist.

2. Offshore-Energieerzeugungsanlage nach Anspruch 1, **dadurch gekennzeichnet, dass** im Fundamentpfahl (9) ein trockener Innenbereich (12) vorliegt, in dem ein Anschlusselement (13) für das elektrische Verbindungskabel (7) angeordnet ist.

3. Offshore-Energieerzeugungsanlage nach einem der Ansprüche 1 oder 2,
**dadurch gekennzeichnet, dass** der Kabeldurchgang (10) außerhalb des Fundamentpfahls (9) in einen Kabeltunnel (14) mündet, der unterhalb des Meeresgrunds (20) verläuft.

4. Offshore-Energieerzeugungsanlage nach Anspruch 3, **dadurch gekennzeichnet, dass** der Kabeltunnel (14) flüssigkeitsdicht ausgebildet ist.

5. Offshore-Energieerzeugungsanlage nach Anspruch 4, **dadurch gekennzeichnet, dass** der Innendurchmesser des Kabeltunnels (14) größer als der Außendurchmesser des elektrischen Verbindungskabels (7) angelegt ist.

6. Offshore-Energieerzeugungsanlage nach Anspruch 5, **dadurch gekennzeichnet, dass** der Kabeltunnel (14) begehbar ist und/oder eine Transportvorrichtung (17) umfasst.

7. Offshore-Energieerzeugungsanlage nach Anspruch 1, **dadurch gekennzeichnet, dass** im Innern des Fundamentpfahls (9) eine Kabelführungsvorrichtung (18) angeordnet ist, die an den Kabeldurchgang (10) anschließt und zu einer Steckvorrichtung (19) für das elektrische Verbindungskabel (7) führt.

8. Verfahren für den elektrischen Anschluss einer Offshore-Energieerzeugungsanlage (1), umfassend
einen durch eine Fluidbewegung angetriebenen Leistungsaufnehmer (2); einen elektrischen Generator (3), der durch den Leistungsaufnehmer (2) wenigstens mittelbar angetrieben wird; und
eine Pfahlgründung (8), umfassend einen Fundamentpfahl (9), der sich unter dem Meeresgrund (20) erstreckt;
**dadurch gekennzeichnet, dass**
ein elektrisches Verbindungskabel (7) zur Leistungsübertragung unterhalb des Meeresgrunds (20) durch einen Kabeldurchgang (10), der durch eine Außenwandung (11) des Fundamentpfahls (9) reicht, gezogen wird.

9. Verfahren nach Anspruch 8, **dadurch gekennzeichnet, dass** der Kabeldurchgang (10) nach dem Errichten des Fundamentpfahls (9) geöffnet wird.

10. Verfahren nach Anspruch 9, **dadurch gekennzeichnet, dass** die Öffnung des Kabeldurchgangs (10) mittels einer Durchbohrung der Außenwandung (11) des Fundamentpfahls (9) ausgeführt wird.

11. Verfahren nach Anspruch 10, **dadurch gekennzeichnet, dass** die Bohrung zur Öffnung des Kabeldurchgangs (10) vom Innern des Fundamentpfahls (9) aus erfolgt.

12. Verfahren nach Anspruch 10, **dadurch gekennzeichnet, dass** die Bohrung zur Öffnung des Kabeldurchgangs (10) mittels einer horizontal gesteuerten Bohrung von außen erfolgt.

13. Verfahren nach Anspruch 12, **dadurch gekennzeichnet, dass** mittels der horizontal gesteuerten Bohrung ein Kabeltunnel (14) bis zu einer Durchbohrungsstelle (21) am Fundamentpfahl (9) hergestellt wird und an der Durchbohrungsstelle (21) der Kabeldurchgang (10) geschaffen wird.

14. Verfahren nach Anspruch 13, **dadurch gekennzeichnet, dass** zwischen dem Kabeltunnel (14) und dem Kabeldurchgang (10) eine flüssigkeitsdichte Verbindung hergestellt wird.

15. Verfahren nach Anspruch 8, **dadurch gekennzeichnet, dass** am Fundamentpfahl (9) ein vorgefertigter Kabeldurchgang (10) angelegt ist und der Fundamentpfahl (9) so in den Meeresboden eingesetzt wird, dass der Kabeldurchgang (10) mit einem unter dem Meeresgrund (20) angelegten Kabeltunnel (14) fluchtet.
